# EUROPÄISCHE PATENTANMELDUNG

(11) **EP 0 890 696 A2**
(43) Veröffentlichungstag der Anmeldung: **13.01.1999**
(21) Anmeldenummer: 98110949.9
(22) Anmeldetag: 16.06.1998
(51) Int. Cl.: E05F 7/00, H02B 1/38, E05C 9/00

(54) **Schaltschrank für die Elektronik und Eletrotechnik**

(30) Priorität: 09.07.1997 DE 19729200
(71) Anmelder: Schroff GmbH, D-75334 Straubenhardt (DE)
(72) Erfinder: Rieger, Uwe, 76301 Karlsbad (DE); Kern, Klaus, 75334 Straubenhardt (DE); Thomas, Daniel, 67160 Seebach (FR)
(74) Vertreter: Durm, Klaus, Dr.-Ing.

(57) **Zusammenfassung**

Es wird ein Schaltschrank für die Elektronik und Elektrotechnik mit mindestens einer einseitig angelenkten Tür (1) sowie einer Zentriereinrichtung zur Höhenzentrierung der Tür (1) beim Schließen vorgeschlagen, bei welchem die Zentriereinrichtung im Bereich des Verschlußmechanismus angeordnet ist und aus einem Zentrierteil (3) und einem Fangteil (11) besteht, welche an der Tür (1) bzw. an einem Rahmenelement (2) des Schaltschranks angeordnet sind und beim Schließen der Tür (1) ineinandergreifen.

Bevorzugterweise werden die Funktionen des Zentrierteils (3) und des Fangteils (11) von ohnehin vorhandenen Elementen des Verschlußmechanismus der Tür (1) übernommen.

## Beschreibung

Die Erfindung betrifft einen Schaltschrank für die Elektronik und Elektrotechnik, mit mindestens einer einseitig angelenkten Tür sowie einer Zentriereinrichtung zur Höhenzentrierung der Tür beim Schließen.

Schaltschränke der eingangs genannten Art bestehen normalerweise aus Metall, um die darin befindlichen elektrischen und elektronischen Bauteile gegen mechanische sowie gegebenenfalls gegen elektromagnetische Einflüsse von außen zu schützen. Die einseitig angelenkten Türen solcher Schaltschränke weisen ein relativ hohes Gewicht auf, so daß die Scharniere dementsprechend dimensioniert sein müssen. Aus Kostengründen, vor allem aber aus Platzgründen, sind der Tragfähigkeit dieser Scharniere Grenzen gesetzt. Es ergibt sich daher im Laufe der Zeit oft das Problem, daß die Türen sich einseitig absenken und somit nicht mehr parallel zum Schrankrahmen stehen. Dies ist einerseits ein optisches Problem, da die in unmittelbarer Nähe liegenden Vergleichskanten des Schrankrahmens die fehlende Parallelität zwischen Tür und Rahmen überdeutlich werden lassen; andererseits besteht auch die Gefahr, daß die Tür im Schrankrahmen verkantet und klemmt. Die Funktion des Verschlußmechanismus kann dadurch in Mitleidenschaft gezogen werden.

Es ist bekannt, Schaltschränke mit einseitig angelenkter Tür mit einer Zentriereinrichtung zur Höhenzentrierung der Tür beim Schließen auszurüsten, die aus einem an der Türunterseite montierten Gleitblock oder einer Auflaufrolle besteht. Der Gleitblock bzw. die Auflaufrolle stützen sich beim Schließen gegen die Unterseite des Schrankrahmens ab und heben dadurch die Tür an. Da die Krafteinleitung beim Schließen der Tür am Verschlußmechanismus - normalerweise also in der Mitte des Türblatts - erfolgt, die Kraft für das Anheben der Tür jedoch an der Unterseite des Türblatts angreift, verwindet sich die Tür beim Schließen. Im praktischen Einsatz zeigt sich, daß eine solche Tür oftmals mit einem kräftigen Tritt gegen die Türunterseite geschlossen wird. Dies beeinträchtigt sowohl die Lebensdauer des Schrankes als auch die Funktion der darin angeordneten Bauteile.

Ausgehend von diesem Stand der Technik liegt der Erfindung die Aufgabe zugrunde, einen Schaltschrank der eingangs genannten Art derart zu verbessern, daß eine verwindungsfreie Höhenzentrierung der Tür beim Schließen gewährleistet ist.

Diese Aufgabe ist durch einen Schaltschrank mit den Merkmalen des Anspruchs 1 gelöst.

Vorteilhafte Ausgestaltungen und Weiterbildungen der Erfindung ergeben sich aus den Ansprüchen 2 bis 9.

Die Zentriereinrichtung zur Höhenzentrierung der Tür beim Schließen des erfindungsgemäßen Schaltschranks besteht aus einem Zentrierteil und einem Fangteil, welche an der Tür bzw. an einem Rahmenelement des Schaltschranks angeordnet sind und beim Schließen der Tür ineinandergreifen. Wichtig ist dabei, daß das Zentrierteil und das Fangteil im Bereich des Verschlußmechanismus angeordnet sind, also im Bereich der Krafteinleitung beim Schließen der Tür. Ein Drehmoment, das ein Verwinden der Tür beim Schließen bewirken könnte, kann deshalb nicht oder höchstens in vernachlässigbarem Maß entstehen. Durch das Ineinandergreifen des Zentrierteils und des Fangteils wird die Tür in geschlossenem Zustand am Schrankrahmen festgelegt, was die Türscharniere entlastet und somit die Lebensdauer des Schaltschranks erhöht.

Die Höhenzentrierung der Tür wird nach der Erfindung also durch lediglich zwei einfach zu montierende, zusätzliche Teile bewirkt. Hierbei kann das Zentrierteil an der Tür und das Fangteil am Schrankrahmen, oder alternativ das Fangteil an der Tür und das Zentrierteil am Schrankrahmen befestigt werden.

Das Zentrierteil kann als Zentrierblock mit mindestens einer Zentrierschräge ausgebildet sein. Ein solcher Zentrierblock ist stabil und bildet aufgrund seiner Zentrierschräge sowohl im Zusammenwirken mit einem Fangblock als auch mit einem komplizierter ausgestalteten Fangteil beim Schließen der Tür einen zentrierenden Formschluß von Tür und Schrankrahmen.

Wenn auch das Fangteil mindestens eine Fangschräge für das Zentrierteil aufweist, gleiten Zentrierteil und Fangteil ohne zusätzlichen Kraftaufwand ineinander und bewirken dabei die Höhenzentrierung der Tür beim Schließen.

Zweckmäßigerweise sind das Zentrierteil und das Fangteil so ausgebildet, daß sie formschlüssig ineinandergreifen.

Besondere Vorteile ergeben sich, wenn zur Ausbildung des Zentrierteils und des Fangteils die ohnehin vorhandenen Elemente des Verschlußmechanismus der Tür verwendet werden:

Wenn der Verschlußmechanismus der Tür einen Riegel und eine Halteplatte für den Riegel umfaßt, kann beispielsweise das Fangteil der Zentriereinrichtung durch die Halteplatte gebildet sein. Hierzu weist die Halteplatte vorzugsweise eine Durchbrechung zur Aufnahme des Zentrierteils auf. Um die Halteplattenfunktion des Fangteils zu verbessern, kann die Halteplatte mit einer Auflaufschräge für den Riegel versehen sein.

Die Ausbildung des Fangteils als Halteplatte für den Riegel vereinfacht die Konstruktion des Schaltschranks, da ein zusätzliches Bauteil entfällt.

Weitere Vorteile ergeben sich, wenn der Riegel auf einer verschiebbaren Verschlußstange befestigt ist, und das Zentrierteil eine Nut zur Führung der Verschlußstange aufweist. Da die Verschlußstange aus Stabilitätsgründen immer geführt sein muß, was nach dieser Weiterbildung der Erfindung vom Zentrierteil übernommen wird, entfällt auch hier ein zusätzliches Bauteil.

Nach den eben beschriebenen Ausgestaltungen der Erfindung ist es also möglich, eine leichte und sichere Höhenzentrierung der Tür eines Schaltschranks beim Schließen gänzlich ohne zusätzliche Bauteile zu gewährleisten.

Eine andere Weiterbildung der Erfindung kann darin bestehen, daß das Zentrierteil als konischer Zentrierstift ausgebildet ist und das Fangteil lediglich aus einer Bohrung zur Aufnahme des Zentrierstifts besteht. Das Herstellen einer Bohrung ist wesentlich kostengünstiger und einfacher, als die Fertigung und Montage eines separaten Bauteils.

Anhand der beigefügten Zeichnungen werden im folgenden zwei Ausführungsbeispiele der Erfindung näher beschrieben. Es zeigen:
- Figur 1: eine perspektivische Darstellung der Zentriereinrichtung;
- Figur 2: eine seitliche Draufsicht auf die Zentriereinrichtung gemäß Figur 1;
- Figur 3: eine perspektivische Darstellung einer Zentriereinrichtung nach einem anderen Ausführungsbeispiel der Erfindung.

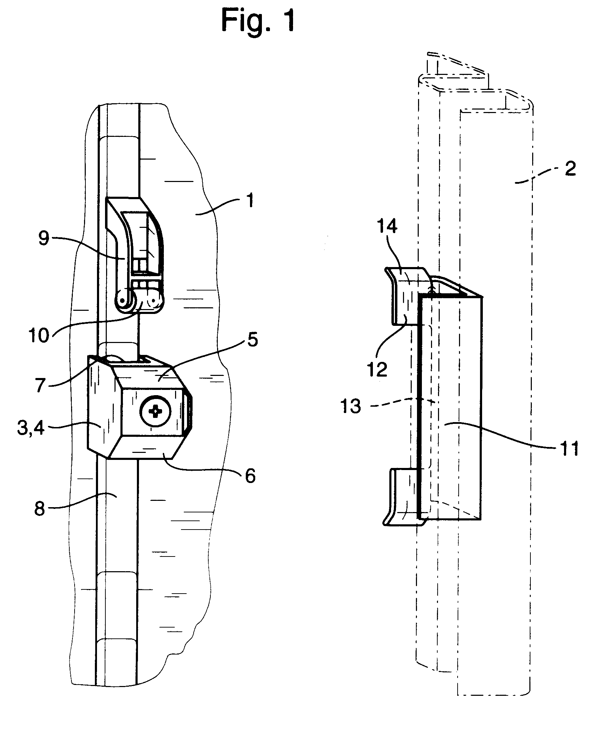

Figur 1 zeigt einen Ausschnitt der Innenseite einer geöffneten Tür 1 sowie einen Ausschnitt eines Rahmenelements 2 des Schaltschranks. An der Innenseite der Tür 1 ist ein Zentrierteil 3 angeordnet, welches als Zentrierblock 4 mit einer oberen Zentrierschräge 5 und einer unteren Zentrierschräge 6 ausgebildet ist. Der Zentrierblock 4 weist eine Nut 7 auf, in welcher eine vertikal verschiebbare Verschlußstange 8 geführt ist. An der Verschlußstange 8 ist ein Riegel 9 mit einer Auflaufrolle 10 angebracht.

Am Rahmenelement 2, welches der Übersichtlichkeit halber nur angedeutet ist, ist ein Fangteil 11 montiert, welches gleichzeitig als Halteplatte 12 für den Riegel 9 fungiert. Die Halteplatte 12 zeigt eine Durchbrechung 13 zur Aufnahme des Zentrierblocks 4 beim Schließen der Tür 1. Die Zentrierschrägen 5 und 6 des Zentrierblocks 4 können dabei an den Kanten der Durchbrechung 13 entlanggleiten und so die Zentrierung der Tür 1 beim Schließen bewirken. Im geschlossenen Zustand der Tür 1 sitzt der Zentrierblock 4 formschlüssig in der Durchbrechung 13 des Fangteils 11.

Die Halteplatte 12 ist zur Bildung einer Auflaufschräge 14 endseitig gebogen, so daß der Riegel 9 mit Hilfe seiner Auflaufrolle 10 leicht und verschleißfrei auf die Halteplatte 12 auflaufen kann, wobei er die Tür 1 am Rahmenelement 2 fixiert.

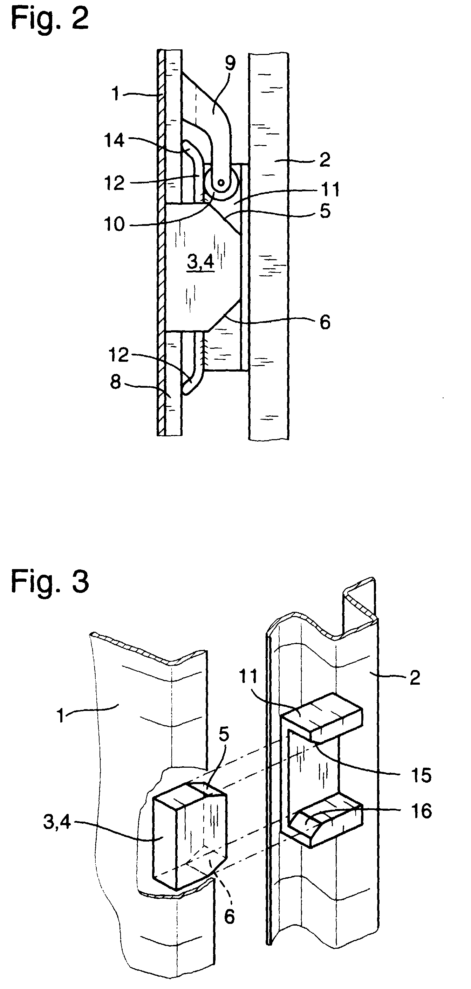

Figur 2 zeigt die Anordnung aus Figur 1 im geschlossenen Zustand der Tür 1, in einer seitlichen Draufsicht: Das als Zentrierblock 4 ausgebildete Zentrierteil 3 sitzt formschlüssig in dem als Halteplatte 12 ausgebildeten Fangteil 11 und legt so die Tür 1 in ihrer Stellung gegenüber dem Rahmenelement 2 fest. Gleichzeitig ist die Verschlußstange 8 in der Nut 7 des Zentrierblocks 4 geführt. Deren Riegel 9 ist mit seiner Auflaufrolle 10 auf die Halteplatte 12 aufgeschoben, wodurch die Tür 1 im geschlossenen Zustand gehalten wird.

Figur 3 zeigt eine gegenüber den Figuren 1 und 2 verschiedene Ausbildung der Erfindung: An der - lediglich im Ausschnitt dargestellten - Tür 1 ist ein als Zentrierblock ausgebildetes Zentrierteil 3 befestigt, das im wesentlichen dem Zentrierblock 4 des ersten Ausführungsbeispiels entspricht. Das - ebenfalls im Ausschnitt dargestellte - Rahmenelement 2 trägt jedoch ein Fangteil 11, das als Fangblock mit einer oberen Fangschräge 15 und einer unteren Fangschräge 16 ausgebildet ist. Wie anhand der Figur 3 erkennbar ist, wirken die obere Zentrierschräge 5 und die obere Fangschräge 15 bzw. die untere Zentrierschräge 6 und die untere Fangschräge 16 zusammen, um die Höhenzentrierung beim Schließen der Tür 1 zu gewährleisten. Im geschlossenen Zustand der Tür 1 sitzen der Zentrierblock 4 und das als Fangblock ausgebildete Fangteil 11 formschlüssig ineinander, was dem geschlossenen Schaltschrank eine hohe Stabilität verleiht.

### Zusammenstellung der Bezugszeichen

- 1: Tür
- 2: Rahmenelement
- 3: Zentrierteil
- 4: Zentrierblock
- 5: Zentrierschräge (obere)
- 6: Zentrierschräge (untere)
- 7: Nut
- 8: Verschlußstange
- 9: Riegel
- 10: Auflaufrolle
- 11: Fangteil
- 12: Halteplatte
- 13: Durchbrechung
- 14: Auflaufschräge
- 15: Fangschräge (obere)
- 16: Fangschräge (untere)

## Patentansprüche

1. Schaltschrank für die Elektronik und Elektrotechnik, mit mindestens einer einseitig angelenkten Tür (1) sowie einer Zentriereinrichtung zur Höhenzentrierung der Tür (1) beim Schließen, dadurch **gekennzeichnet,** daß die Zentriereinrichtung aus einem Zentrierteil (3) und einem Fangteil (11) besteht, welche im Bereich des Verschlußmechanismus an der Tür (1) bzw. an einem Rahmenelement (2) des Schaltschranks angeordnet sind und beim Schließen der Tür (1) ineinandergreifen.

2. Schaltschrank nach Anspruch 1, dadurch **gekennzeichnet,** daß das Zentrierteil (3) als Zentrierblock (4) mit mindestens einer Zentrierschräge (5, 6) ausgebildet ist.

3. Schaltschrank nach einem der Ansprüche 1 oder 2, dadurch **gekennzeichnet,** daß das Fangteil (11) mindestens eine Fangschräge (15, 16) für das Zentrierteil (3) aufweist.

4. Schaltschrank nach einem der Ansprüche 1 bis 3, dadurch **gekennzeichnet,** daß das Zentrierteil (3) und das Fangteil (11) so ausgebildet sind, daß sie formschlüssig ineinandergreifen.

5. Schaltschrank nach einem der Ansprüche 1 bis 4, dadurch **gekennzeichnet,** daß der Verschlußmechanismus der Tür (1) einen Riegel (9) und eine Halteplatte (12) für den Riegel (9) umfaßt, wobei das Fangteil (11) der Zentriereinrichtung als Halteplatte (12) ausgebildet ist.

6. Schaltschrank nach Anspruch 5, dadurch **gekennzeichnet,** daß die Halteplatte (12) eine Durchbrechung (13) zur Aufnahme des Zentrierteils (3) aufweist.

7. Schaltschrank nach einem der Ansprüche 5 oder 6, dadurch **gekennzeichnet,** daß die Halteplatte (12) eine Auflaufschräge (14) für den Riegel (9) aufweist.

8. Schaltschrank nach einem der Ansprüche 5 bis 7, dadurch **gekennzeichnet,** daß der Riegel (9) auf einer verschiebbaren Verschlußstange (8) befestigt ist und daß das Zentrierteil (3) eine Nut (7) zur Führung der Verschlußstange (8) aufweist.

9. Schaltschrank nach einem der Ansprüche 1 bis 4, dadurch **gekennzeichnet,** daß das Zentrierteil (3) als konischer Zentrierstift ausgebildet und das Fangteil (11) durch eine Bohrung zur Aufnahme des Zentrierstifts gebildet ist.
